# FASCICULE DE BREVET EUROPEEN

(11) **EP 0 442 766 B1**
(45) Date de publication et mention de la délivrance du brevet: **04.05.1994**
(21) Numéro de dépôt: 91400087.2
(22) Date de dépôt: 16.01.1991
(51) Int. Cl.: A47J 37/06, A47J 37/04

(54) **Appareil culinaire pour griller un aliment en surface**
Küchengerät zum Grillen von Nahrungsmitteln
Culinary apparatus for grilling the surface area of a food product

(30) Priorité: 17.01.1990 FR 9000494
(43) Date de publication de la demande: 21.08.1991
(73) Titulaire: SEB S.A., F-21260 Selongey (FR)
(72) Inventeur: Eisenberg, Roger, F-57157 Marly (FR)
(74) Mandataire: Michelet, Alain

(56) Documents cités:
- CH-A- 486 873
- DE-A- 2 727 972
- US-A- 4 404 898
- US-A- 4 516 486
- US-A- 4 535 753

## Description

La présente invention concerne un appareil culinaire pour griller un aliment, et plus spécifiquement un appareil culinaire pour griller un aliment en surface par rayonnement.

Les appareils de ce type comportent généralement au moins un élément radiant, qui produit un rayonnement calorifique direct divergent, associé à un réflecteur chargé de renvoyer le rayonnement calorifique réfléchi vers la surface du produit à griller.

D'une manière générale, les appareils connus constituent un compromis, pour un même aliment, entre la puissance de l'élément radiant, la distance entre celui-ci et la surface exposée au rayonnement de l'aliment à griller, la régularité et la qualité du grillage, le temps de grillage et l'encombrement général de l'appareil.

On connaît de très nombreux appareils du type précité qui comportent un élément formant support sur lequel est déposé l'aliment à griller, et un élément radiant et un réflecteur placés de l'autre côté de l'aliment à griller par rapport au support. L'intensité du rayonnement calorifique reçu par la surface exposée à celui-ci de l'aliment à griller varie ainsi de façon importante avec l'épaisseur dudit aliment, pour la plupart des formes habituelles en coupe transversale du réflecteur. Les utilisateurs de ces appareils apprécient le fait qu'il n'existe entre l'élément radiant et la surface exposée de l'aliment à griller aucun obstacle susceptible de créer sur cette surface des marques indésirables, et la simplicité de la structure et l'encombrement réduit de ces appareils. Ils déplorent par contre l'irrégularité précitée de la qualité du grillage.

D'autre appareils comportent une grille interposée entre l'élément radiant et l'aliment à griller : on obtient donc une qualité de grillage constante quelle que soit l'épaisseur de l'aliment à griller : par contre, la grille laisse sur la surface exposée des marques indésirables crées par l'ombre de la grille.

On connaît, d'après le US-A- 4 516 486, un appareil culinaire pour griller un aliment déposé sur une plaque transparente au rayonnement calorifique. Sous cette plaque se déplace un élément radiant allongé placé à l'intérieur d'un réflecteur ayant en coupe transversale la forme d'une partie d'ellipse : l'élément radiant est placé au foyer de ladite ellipse situé à l'intérieur du réflecteur, et le second foyer de l'ellipse correspond à la face supérieure de la plaque sur laquelle est déposé l'aliment à griller.

Le rayonnement réfléchi est donc concentré par le réflecteur elliptique sur une bande très étroite de la surface inférieure de l'aliment à griller. Le grillage de cet aliment est donc indépendant de l'épaisseur de celui-ci. Par contre, du fait de cette grande concentration du rayonnement réfléchi, la surface exposée de l'aliment est brutalement grillée, voire carbonisée, et cet appareil est en réalité d'une utilisation très délicate. Cet appareil est en outre relativement encombrant, puisque la section transversale du réflecteur occupe une partie importante du périmètre de l'ellipse. Cet appareil a en outre une structure complexe et onéreuse.

La demande de brevet allemand DE-A1-2 727 972 décrit un réflecteur tri-focal de forme elliptique ayant un foyer commun de façon à concentrer les rayons réfléchis vers l'aliment à griller qui ne défile pas devant les éléments radiants. Le résultat recherché est la cuisson améliorée d'aliment et la structure de l'appareil permet une économie d'énergie.

Le but de la présente invention est de remédier aux inconvénients des appareils connus et de proposer un appareil culinaire de conception et de structure très simples, susceptible de griller d'une manière sensiblement constante des aliments de natures et d'épaisseurs différentes.

L'appareil culinaire visé par l'invention pour griller un aliment en surface par rayonnement comporte au moins un élément radiant, au moins un réflecteur qui est destiné à réfléchir le rayonnement calorifique vers la surface de l'aliment à griller exposée audit rayonnement, et qui a en coupe transversale la forme d'une partie d'ellipse, l'élément radiant étant placé au foyer de ladite ellipse situé à l'intérieur du réflecteur ; l'appareil comporte également un élément formant support sur lequel est déposé l'aliment à griller, et des moyens pour animer ledit aliment d'un mouvement relatif de défilement par rapport à l'élément radiant et au réflecteur.

L'invention a donc pour objet un appareil culinaire pour assurer par rayonnement un grillage sensiblement constant de la surface d'un aliment déposé sur un élément formant support quelle que soit l'épaisseur dudit aliment, cet appareil comportant au moins un élément radiant, au moins un réflecteur qui est destiné à réfléchir le rayonnement calorifique vers la surface de l'aliment à griller exposée audit rayonnement, et qui a, en coupe transversale, la forme d'une partie d'ellipse, l'élément radiant étant placé au foyer de ladite ellipse situé à l'intérieur du réflecteur, l'appareil comportant également des moyens pour animer ledit aliment d'un mouvement relatif de défilement par rapport à l'élément radiant et au réflecteur, caractérisé en ce que ledit support est placé devant le réflecteur et le second foyer de l'ellipse et est adapté à recevoir sur sa surface tournée vers l'élément radiant et le réflecteur des aliments à griller placés entre ladite surface et le réflecteur.

Ainsi, un aliment interposé entre le réflecteur et le second foyer de l'ellipse reçoit, sur sa face exposée, un rayonnement direct qui diverge depuis l'élément radiant situé au premier foyer de la partie d'ellipse que constitue le réflecteur, et un rayonnement réfléchi qui converge vers le second foyer. Lorsque la distance entre la surface exposée au rayonnement et l'élément radiant varie, les densités des flux calorifiques respectifs reçus de ces deux rayonnements varient en sens contraires : si cette distance augmente, par exemple, le flux reçu par le rayonnement direct diminue alors que le flux reçu par le rayonnement réfléchi augmente. Par contre, pour un aliment qui défile à vitesse constante devant l'élément radiant et son réflecteur, la surface éclairée par le rayonnement direct varie dans le même sens que ladite distance et dans le sens opposé à celui de la densité de flux. L'inverse se produit pour le rayonnement réfléchi. Tout ceci compense théoriquement au moins partiellement la diminution du flux direct ; le phénomène inverse se produit lorsque la distance précitée diminue.

La Demanderesse s'est aperçu que, dans ces conditions, on obtenait de façon surprenante un degré de grillage sensiblement régulier quelle que soit la position de la surface exposée, ce qui est un résultat très important par rapport aux inconvénients précités des appareils connus. La surface grillée ne comporte aucune marque, et le grillage est donc uniforme.

Suivant une version avantageuse de l'invention, l'élément radiant et le réflecteur sont allongés selon une seule et même direction, et l'appareil comporte un transporteur pour faire défiler à vitesse constante devant l'élément radiant et le réflecteur des aliments dont la surface exposée au rayonnement est à une distance variable de l'élément radiant.

Un tel résultat peut ainsi être obtenu au moyen d'un appareil de structure très simple, peu encombrant et donc peu onéreux, susceptible de satisfaire toutes les exigences des utilisateurs les plus exigeants.

Suivant une version préférée de l'invention, l'ellipse qui définit la forme du réflecteur est symétrique par rapport au plan moyen de la zone de grillage situé à mi-distance entre le plan sur lequel sont placés les aliments à griller et le plan contenant les bords du réflecteur, et a des dimensions telles que les rayons qui relient le second foyer de l'ellipse formant source fictive aux bords du réflecteur forment entre eux un angle sensiblement égal à l'angle d'incidence utile de grillage α de l'aliment à griller à l'intérieur duquel les rayons calorifiques sont sensiblement totalement absorbés et sensiblement pas réfléchis par ledit aliment.

On obtient ainsi une qualité et une régularité de grillage optimale quelle que soit l'épaisseur de l'élément à griller dans la limite de la capacité de l'appareil, et ceci avec une dépense énergétique minimale.

D'autres caractéristiques et avantages de l'invention apparaîtront dans la description ci-après.

Aux dessins annexés donnés à titre d'exemples non limitatifs :
- la figure 1 est un schéma en coupe transversale permettant d'expliquer l'invention,
- la figure 2 est une vue schématique en coupe transversale d'un élément radiant et d'un réflecteur conformes à l'invention,
- la figure 3 est une vue semblable à la figure 2 illustrant le mode de fonctionnement d'un appareil de grillage conforme à l'invention,
- la figure 4 est une vue réduite semblable à la figure 2 d'un appareil de grillage conforme à l'invention.

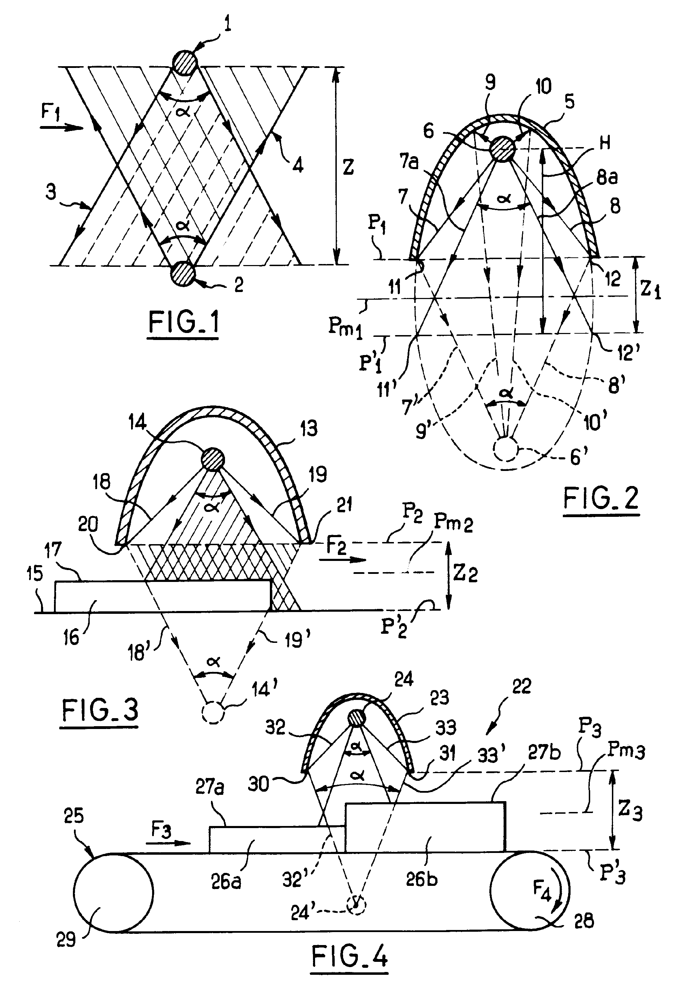

Le schéma de la figure 1 représente deux sources de rayonnement infra-rouge 1, 2 émettant chacune un faisceau de rayonnement utile d'angle limité α en direction de l'autre source.

On sait que l'absorption du rayonnement infrarouge par les aliments dépend de la nature physico-chimique de ceux-ci et varie avec la longueur d'onde du rayonnement, la direction d'émission de ce dernier et la température de la surface exposée.

Pour une source de longueur d'onde donnée et un aliment donné, on constate que la surface grillée ne correspond pas à toute la surface éclairée par le rayonnement, mais à une partie seulement de celle-ci. On peut mesurer à diverses distances de la source la largeur de la partie grillée et définir à partir de ladite source l'angle d'incidence utile de grillage α, représenté à la figure 1, à l'intérieur duquel les rayons calorifiques émanant directement de la source sont pratiquement totalement absorbés et pratiquement pas réfléchis par la surface de l'élément ; s'il n'y a pas de réflecteur, les rayons calorifiques issus de l'une des deux sources, situés à l'extérieur du faisceau correspondant d'angle α représenté et frappant la surface exposée d'un aliment, ne sont sensiblement plus absorbés mais sont en grande partie réfléchis.

Le schéma de la figure 1 représente donc les faisceaux utiles de grillage 3, 4 issus respectivement des sources 1 et 2 pour un aliment donné placé entre ces deux sources 1, 2.

La théorie montre qu'un aliment idéal infiniment mince défilant à vitesse constante dans un plan perpendiculaire au segment joignant les deux sources et placé à un niveau quelconque entre celles-ci, ce défilement étant schématisé par exemple par la flèche F₁, subit de la part de ces deux sources deux grillages dont la somme est constante pour toutes les positions entre les deux sources 1, 2. La zone Z indiquée entre les deux sources est donc une zone à grillage constant.

Le schéma de la figure 2 représente un réflecteur 5 ayant en coupe transversale la forme d'une partie d'ellipse, et une source 6 de rayonnement infrarouge placée au foyer de cette partie d'ellipse 5. Selon une propriété géométrique connue de l'ellipse, les rayons calorifiques tels que 7, 8, 9, 10 issus de la source 6 et renvoyés par le réflecteur 5 donnent des rayons réfléchis 7', 8', 9', 10' qui convergent vers le second foyer de l'ellipse comme si une source fictive 6' était placée en ce second foyer.

Le réflecteur 5 est par ailleurs choisi pour que l'angle entre les rayons extrêmes 7', 8' du faisceau réfléchi qui s'appuient sur les bords 11, 12 du réflecteur 5 soit égal à l'angle d'incidence utile de grillage α pour l'aliment considéré. Le petit axe de l'ellipse support du réflecteur 5 passe par le plan moyen Pm1 de la zone à grillage constant Z₁, laquelle est définie à l'avance comme étant la zone à l'intérieur de laquelle sont placés les aliments à griller. La zone à grillage constant Z1 est ainsi délimitée entre deux plans : d'une part, le plan P'1 correspondant théoriquement à une épaisseur nulle, qui est le plan sur lequel sont déposés les aliments à griller ; d'autre part, le plan P1, qui correspond à l'épaisseur maximale admissible des aliments à griller, et qui contient les bords 11, 12 du réflecteur 5.

Du fait de la symétrie de l'ellipse par rapport au plan moyen Pₘ₁, l'ellipse passe également par les points 11' et 12' du plan P'1 symétriques des points 11 et 12 par rapport au plan Pₘ₁. De même, les rayons 7a et 8a joignant respectivement la source 6 aux points 11' et 12' font entre eux un angle égal à l'angle d'incidence utile de grillage α.

Dans ces conditions, tout le rayonnement réfléchi issu du réflecteur est compris dans l'angle utile de grillage. Il est complètement absorbé par l'aliment. Une petite partie du rayonnement direct n'appartient pas à l'angle d'incidence utile de grillage et n'est pas complètement absorbée par l'aliment ; cela compense la perte de rayonnement réfléchi due au rendement du réflecteur. L'équilibre entre rayonnement direct et rayonnement réfléchi est optimum, et garantit le grillage constant indépendamment de la hauteur de l'aliment.

Ainsi, pour déterminer la forme elliptique d'un réflecteur 5 pour un aliment dont on a déterminé l'angle d'incidence utile de grillage α, il faut se donner deux paramètres : la hauteur de la zone à grillage constant Z1 au-dessus du plan P'1 sur lequel on dépose les aliments, et, par exemple, la hauteur H de la source 6 au-dessus du plan P'1, ce qui donne un ordre de grandeur de l'encombrement en hauteur de l'appareil : l'angle α donne les rayons 7a et 8a et les points 11' et 12'. A partir du plan P'1 et de la hauteur de la zone Z1, on détermine les plans P1 et Pₘ₁ et la source fictive 6'. L'ellipse est ainsi complètement définie par ses deux foyers, son petit axe et les points 11, 12 et 11', 12'. On pourrait aussi, au lieu de la hauteur H, se donner la distance entre les points 11' et 12' et déterminer l'emplacement de la source 6 à partir de l'angle α.

Dans la réalisation représentée schématiquement à la figure 3, le réflecteur 13 a en coupe transversale la forme d'une partie d'ellipse limitée par le plan P₂. Une source de rayonnement infra-rouge 14 est placée au foyer de la partie d'ellipse que constitue le réflecteur 13.

Un aliment 16 placé sur un support 15 qui définit un plan P'₂ perpendiculaire au segment de droite joignant les deux foyers de l'ellipse reçoit à la fois un rayonnement direct, émanant directement des parties de la source 14 visibles depuis la surface exposée 17 de l'aliment 16, et un rayonnement réfléchi par le réflecteur 13 et qui converge vers la source fictive 14' placée au second foyer de l'ellipse.

La zone Z₂ comprise entre les plans P₂ et P'₂ est la zone à grillage constant et définit la hauteur maximale admissible des aliments à griller. Le plan moyen de cette zone Z₂ est désigné par Pm₂.

Le rayonnement direct est limité, dans le plan de la figure, par les rayons extrêmes 18, 19 émanant de la source 14 et qui s'appuient sur les bords 20, 21 du réflecteur 13. Le réflecteur 13 est dimensionné pour que l'angle entre les deux rayons réfléchis correspondants 18', 19' qui convergent vers la source fictive 14' soit égal à l'angle d'incidence utile de grillage α correspondant à l'aliment 16.

Tous les rayons calorifiques émanant de la source 14 et réfléchis par le réflecteur 13 sont entièrement absorbés par la surface exposée 17 de l'aliment 16. On a ainsi un rendement de grillage maximal.

Il résulte de ce qui précède que si on fait défiler à vitesse constante l'aliment 16 sur le support 15 dans le plan P'₂, par exemple dans le sens de la flèche F2, on retrouve une configuration semblable à celle décrite en référence à la figure 1 : la surface exposée 17 va ainsi subir sous l'action des rayonnements direct et réfléchi un grillage constant quelle que soit la position de la surface 17 entre les bords 20, 21 du réflecteur 13 et le plan de base P'₂.

Dans la réalisation représentée à la figure 4, l'appareil 22 comporte un réflecteur 23 allongé selon une seule direction principale et qui a en section transversale dans le plan de la feuille la forme d'une partie d'ellipse limitée par un plan P₃. Le réflecteur 23 est réalisé de façon connue par exemple en un métal poli tel que l'aluminium.

Au foyer de la partie d'ellipse que constitue le réflecteur 23 est placée une source 24 de rayonnement infra-rouge. Cette source 24 est constituée par exemple, par un barreau de stéatite sur lequel est enroulé un fil résistant au Ni-Cr, ou par une résistance blindée, ou par une lampe à halogène en forme de tube conçue pour émettre un rayonnement important dans la gamme de l'infra-rouge, ou par toute autre source.

Un transporteur 25 est prévu dans un plan P'₃ sous le réflecteur 23 pour faire défiler à vitesse constante devant le réflecteur des portions 26a, 26b, d'un même aliment dont les surfaces exposées au rayonnement 27a, 27b se trouvent à des hauteurs différentes au-dessus de la surface supérieure du transporteur 25.

Le transporteur 25 est entraîné dans le sens de la flèche F₃ par un tambour moteur 28 entraîné lui-même dans le sens de la flèche F₄ par un moteur (non représenté) à vitesse variable réglable en fonction de la nature de l'aliment à griller, ou à vitesse fixe et à fonctionnement selon une séquence variable réglable de même. Il passe également autour d'un tambour de retour 29 qui tourne librement.

Le transporteur 25 peut être d'un type connu quelconque, et être constitué par exemple par un tapis continu, ou par des courroies ou des chaînes ou des câbles portant des augets (non représentés) supportant eux-mêmes les aliments.

Comme décrit ci-dessus, on obtient un grillage constant de la surface exposée 27a, 27b de la portion 26a, 26b du même aliment quelle que soit la position de cette surface dans la zone Z₃ comprise entre le plan P'₃ de la face supérieure du transporteur 25 et le plan P₃ des bords 30 et 31 du réflecteur 23 et dont le plan moyen est désigné par Pm₃. La source fictive est désignée par 24'.

Comme déjà décrit en référence à la figure 3, l'ellipse est telle que l'angle compris entre les rayons 32', 33' du rayonnement réfléchi qui joignent le foyer 24' formant source fictive de l'ellipse aux bords 30, 31 du réflecteur 23 est égal à l'angle d'incidence utile de grillage α de l'aliment à griller.

On peut modifier la vitesse du transporteur 25 et/ou la puissance de la source 24 pour griller un autre aliment ou modifier le degré de grillage.

On a ainsi décrit un appareil simple et robuste de grillage en surface pour griller la surface exposée d'une portion d'un même aliment quelle que soit la position de cette surface, c'est-à-dire quelle que soit l'épaisseur de ladite portion.

L'aliment à griller peut évidemment être une tranche de pain, dont l'épaisseur peut donc varier dans des proportions considérables sans modifier le degré de grillage de la surface de celle-ci : la demanderesse a ainsi grillé de façon constante la surface supérieure de tranches de pain d'épaisseurs comprises entre 8 et 35 mm, le coeur des tranches de pain restant moelleux.

L'aliment à griller peut également être du fromage, par exemple pour faire gratiner en surface une préparation culinaire.

La dimension du réflecteur 23 dans la direction F₃ de défilement relatif des aliments 26a, 26b à griller par rapport au réflecteur peut être nettement inférieure à la dimension correspondante desdits aliments. La hauteur du réflecteur, et donc la distance entre l'élément radiant et la surface exposée 27a, 27b de l'aliment 26a, 26b à griller peuvent ainsi être faibles, ce qui permet d'obtenir un rayonnement calorifique très concentré, donc très puissant, et donc un grillage très rapide des aliments pour un faible encombrement en hauteur de l'appareil. Cette disposition permet également de prévoir de part et d'autre du réflecteur 23 un capotage (non représenté) évitant tout risque de brûlure pour l'utilisateur de l'appareil de grillage.

Bien entendu, l'invention n'est pas limitée au mode de réalisation que l'on vient de décrire, et on peut apporter à celui-ci de nombreux changements et modifications sans sortir du domaine de l'invention.

Ainsi, le défilement dans un plan horizontal associé à une ellipse de grand axe vertical, adapté à des aliments à griller d'un seul côté (par exemple gratin) ou à des aliments perdant leur consistance lors du grillage, tels que par exemple des tranches de fromage, peut être remplacé en particulier pour un aliment qui se présente en tranches, tel que du pain, par un défilement dans un plan vertical associé à une ellipse de grand axe horizontal, ou à un défilement dans un plan incliné par rapport à l'horizontale, le grand axe de l'ellipse étant perpendiculaire ou sensiblement perpendiculaire à ce plan incliné.

L'axe longitudinal de l'élément radiant et du réflecteur peut, dans la réalisation de la figure 4, faire un angle différent de 90° par rapport à la direction F₃ de défilement des aliments.

L'appareil décrit ci-dessus peut également, pour griller un aliment se présentant en tranches, tel que du pain par exemple, être associé à des moyens connus servant à griller l'autre face des tranches, simultanément ou non.

On peut aussi, au lieu de faire défiler les aliments devant le réflecteur et l'élément radiant, faire défiler ces derniers devant les aliments.

On peut aussi, au lieu du défilement relatif dans un plan, des aliments par rapport à l'élément radiant et au réflecteur, faire tourner le réflecteur autour de l'élément radiant et/ou faire défiler les aliments sur une surface courbe devant l'élément radiant et le réflecteur.

On peut évidemment prévoir plusieurs éléments radiants successifs, et faire varier, pendant le défilement d'une même portion d'aliment, la vitesse de défilement et/ou la puissance de l'élément radiant pour obtenir un grillage régulier et constant de la surface exposée de celui-ci.

## Revendications

1. Appareil culinaire pour assurer par rayonnement un grillage sensiblement constant de la surface d'un aliment (16, 26a, 26b) déposé sur un élément formant support (15, 25) quelle que soit l'épaisseur dudit aliment, cet appareil comportant au moins un élément radiant (14, 24), au moins un réflecteur (13, 23) qui est destiné à réfléchir le rayonnement calorifique vers la surface (17, 27a, 27b) de l'aliment (16, 26a, 26b) à griller exposée audit rayonnement, et qui a, en coupe transversale, la forme d'une partie d'ellipse, l'élément radiant (14, 24) étant placé au foyer de ladite ellipse situé à l'intérieur du réflecteur (13, 23), l'appareil comportant également des moyens pour animer ledit aliment d'un mouvement relatif de défilement par rapport à l'élément radiant (14, 24) et au réflecteur (13, 23), caractérisé en ce que ledit support (15, 25) est placé devant le réflecteur (13, 23) et le second foyer de l'ellipse et est adapté à recevoir sur sa surface tournée vers l'élément radiant (14, 24) et le réflecteur (13, 23) des aliments à griller placés entre ladite surface et le réflecteur (13, 23).

2. Appareil culinaire conforme à la revendication 1, caractérisé en ce que l'élément radiant (14, 24) et le réflecteur (13, 23) sont allongés selon une seule et même direction.

3. Appareil culinaire conforme à la revendication 2, caractérisé en ce que le mouvement relatif de défilement s'effectue dans la direction perpendiculaire à la direction longitudinale de l'élément radiant (14, 24) et du réflecteur (13,23).

4. Appareil culinaire conforme à l'une des revendications 1 à 3, caractérisé en ce que la vitesse dudit mouvement relatif de défilement est réglable en fonction de la nature de l'aliment à griller (16, 26a, 26b) et est maintenue constante pendant le défilement dudit aliment.

5. Appareil culinaire conforme à l'une des revendications 1 à 4, caractérisé en ce qu'il comporte un transporteur (25) pour faire défiler devant l'élément radiant (24) et le réflecteur (23) des aliments (26a, 26b) déposés sur la surface du transporteur (25) tournée vers le réflecteur (23).

6. Appareil culinaire conforme à l'une des revendications 1 à 5, caractérisé en ce que l'ellipse qui définit la forme du réflecteur (13, 23) est symétrique par rapport au plan moyen (Pm₂, Pm₃) de la zone de grillage (Z₂, Z₃ ) situé à mi-distance entre le plan de base (P'₂, P'₃) sur lequel sont placés les aliments (16 ; 26a, 26b) à griller et le plan (P₂, P₃) qui contient les bords (20, 21 ; 30, 31) du réflecteur (13, 23) et qui définit, avec le plan de base (P'₂, P'₃), ladite zone de grillage (Z₂, Z₃).

7. Appareil culinaire conforme à l'une des revendications 1 à 6, caractérisé en ce que l'ellipse qui définit la forme du réflecteur (13, 23) a des dimensions telles que les rayons (18', 19' ; 32', 33') qui relient le second foyer de l'ellipse formant source fictive (14', 24') aux bords (20, 21 30, 31) du réflecteur (13, 23) forment entre eux un angle sensiblement égal à l'angle prédéterminé d'incidence utile de grillage α à l'intérieur duquel les rayons calorifiques sont sensiblement totalement absorbés et sensiblement pas réfléchis par un même aliment à griller prédéterminé (16 ; 26a, 26b).

8. Appareil culinaire conforme à l'une des revendications 1 à 7, caractérisé en ce que la dimension du réflecteur (13, 23) dans la direction (F₂, F₃) de défilement relatif par rapport à celui-ci du support (15, 25) est nettement inférieure à la dimension correspondante dudit support.

9. Appareil culinaire conforme à l'une des revendications 1 à 8, caractérisé en ce que la puissance de l'élément radiant (14, 24) est réglable.

## Claims

1. A culinary appliance for substantially constant grilling, by radiation, of the surface of a food (16, 26a, 26b) disposed on a support element (15, 25), irrespective of the thickness of said food, said appliance comprising at least one radiant element (14, 24), at least one reflector (13, 23) intended to reflect the heat radiation towards that surface (17, 27a, 27b) of the food (16, 26a, 26b) for grilling which is exposed to the radiation, and which in cross-section has the form of part of an ellipse, the radiant element (14, 24) being disposed at the focus of said ellipse situated inside the reflector (13, 23), the appliance also comprising means for imparting to said food a relative displacement with respect to the radiant element (14, 24) and to the reflector (13, 23), characterised in that the said support (15, 25) is disposed in front of the reflector (13, 23) and the second focus of the ellipse and is adapted to receive on its surface facing the radiant element (14, 24) and the reflector (13, 23) foods for grilling disposed between said surface and the reflector (13, 23).

2. A culinary appliance according to claim 1, characterised in that the radiant element (14, 24) and the reflector (13, 23) are elongated in one and the same direction.

3. A culinary appliance according to claim 2, characterised in that the relative displacement is effected in the direction perpendicular to the longitudinal direction of the radiant element (14, 24) and of the reflector (13, 23).

4. A culinary appliance according to any one of claims 1 to 3, characterised in that the speed of the said relative displacement is adjustable in dependence on the nature of the food for grilling (16, 26a, 26b) and is kept constant during the displacement of said food.

5. A culinary appliance according to any one of claims 1 to 4, characterised in that it comprises a conveyor (25) to displace with respect to the radiant element (24) and the reflector (23) foods (26a, 26b) deposited on the surface of the conveyor (25) facing the reflector (23).

6. A culinary appliance according to any one of claims 1 to 5, characterised in that the ellipse which defines the shape of the reflector (13, 23) is symmetrical with respect to the central plane (Pm₂, PM₃) of the grilling zone (Z₂, Z₃) situated midway between the base plane (P'₂, P'₃) on which the foods for grilling (16, 26a, 26b) are disposed and the plane (P₂, P₃) containing the edges (20, 21; 30, 31) of the reflector (13, 23) and defining, with the base plane (P'₂, P'₃), the said grilling zone (Z₂, Z₃).

7. A culinary appliance according to any one of claims 1 to 6, characterised in that the ellipse which defines the shape of the reflector (13, 23) has dimensions such that the radii (18', 19'; 32', 33') connecting the second focus of the ellipse forming the imaginary source (14', 24') to the edges (20, 21; 30, 31) of the reflector (13, 23) together form an angle substantially equal to the predetermined useful angle of incidence for grilling α inside which the heat rays are substantially totally absorbed and substantially not reflected by one and the same predetermined food for grilling (16; 26a, 26b).

8. A culinary appliance according to any one of claims 1 to 7, characterised in that the dimension of the reflector (13, 23) in the direction (F₂, F₃) of relative displacement with respect to that of the support (15, 25) is very much less than the corresponding dimension of the support.

9. A culinary appliance according to any one of claims 1 to 8, characterised in that the power of the radiant element (14, 24) is adjustable.

## Patentansprüche

1. Küchengerät, das durch Strahlung ein im wesentlichen konstantes Grillen der Oberfläche eines auf einem einen Träger (15, 25) bildenden Element angeordneten Nahrungsmittels (16, 26a, 26b) unabhängig von der Dicke des Nahrungsmittels gewährleistet, wobei das Gerät wenigstens ein Strahlungselement (14, 24) sowie wenigstens einen Reflektor (13, 23) enthält, der dazu vorgesehen ist, die Wärmestrahlung in Richtung der Oberfläche (17, 27a, 27b) des zu grillenden und der Strahlung ausgesetzten Nahrungsmittels (16, 26a, 26b) zu reflektieren, und der im Querschnitt die Form eines Ellipsenabschnittes besitzt, wobei das Strahlungselement (14, 24) im Brennpunkt der Ellipse im Inneren des Reflektors (13, 23) angeordnet ist, wobei das Gerät auch Mittel besitzt, die dem Nahrungsmittel eine Vorbeilauf-Relativbewegung bezüglich des Strahlungselementes (14, 24) und des Reflektors (13, 23) erteilen, dadurch gekennzeichnet, daß der Träger (15, 25) vor dem Reflektor (13, 23) und dem zweiten Brennpunkt der Ellipse angeordnet und dafür ausgelegt ist, auf seiner dem Strahlungselement (14, 24) und dem Reflektor (13, 23) zugewandten Oberfläche zu grillende Nahrungsmittel zwischen der Oberfläche und dem Reflektor (13, 23) angeordnet aufzunehmen.

2. Küchengerät nach Anspruch 1, dadurch gekennzeichnet, daß das Strahlungselement (14, 24) und der Reflektor (13, 23) in ein und derselben Richtung langgestreckt sind.

3. Küchengerät nach Anspruch 2, dadurch gekennzeichnet, daß die Vorbeilauf-Relativbewegung in der zur Längsrichtung des Strahlungselements (14, 24) und des Reflektors (13, 23) senkrechten Richtung ausgeführt wird.

4. Küchengerät nach einem der Ansprüche 1 bis 3, dadurch gekennzeichnet, daß die Geschwindigkeit der Vorbeilauf-Relativbewegung in Abhängigkeit von der Art des zu grillenden Nahrungsmittels (16, 26a, 26b) einstellbar ist und während des Vorbeilaufens dieses Nahrungsmittels konstantgehalten wird.

5. Küchengerät nach einem der Ansprüche 1 bis 4, dadurch gekennzeichnet, daß es eine Transporteinrichtung (25) aufweist, um die auf der dem Reflektor (23) zugewandten Oberfläche der Transporteinrichtung (25) angeordneten Nahrungsmittel (26a, 26b) vor dem Strahlungselement (24) und dem Reflektor (23) vorbeilaufen zu lassen.

6. Küchengerät nach einem der Ansprüche 1 bis 5, dadurch gekennzeichnet, daß die die Form des Reflektors (13, 23) definierende Ellipse in Bezug auf die Mittelebene (Pm₂, Pm₃) der Grillzone (Z₂, Z₃) symmetrisch ist, die sich im halben Abstand zwischen der Basisebene (P'₂, P'₃), auf der die zu grillenden Nahrungsmittel (16; 26a, 26b) angeordnet sind, und der Ebene (P₂, P₃) befindet, die die Ränder (20, 21; 30, 31) des Reflektors (13, 23) enthält und die zusammen mit der Basisebene (P'₂, P'₃) die Grillzone (Z₂, Z₃) definiert.

7. Küchengerät nach einem der Ansprüche 1 bis 6, dadurch gekennzeichnet, daß die die Form des Reflektors (13, 23) definierende Ellipse solche Abmessungen besitzt, daß die Radien (18', 19'; 32', 33'), die den eine fiktive Quelle (14', 24') bildenden zweiten Brennpunkt der Ellipse mit den Rändern (20, 21; 30, 31) des Reflektors (13, 23) verbinden, untereinander einen Winkel bilden, der im wesentlichen gleich dem zum Grillen geeigneten, vorbestimmten Einfallswinkel α ist, wobei die Wärmestrahlen im wesentlichen vollständig im Inneren eines vorbestimmten, zu grillenden Lebensmittels (16; 26a, 26b) absorbiert und im wesentlichen nicht reflektiert werden.

8. Küchengerät nach einem der Ansprüche 1 bis 7, dadurch gekennzeichnet, daß die Abmessung des Reflektors (13, 23) in der Richtung (F₂, F₃) des relativen Vorbeilaufens des Trägers (15, 25) bezüglich des Reflektors deutlich kleiner als die zugehörige Abmessung des Trägers ist.

9. Küchengerät nach einem der Ansprüche 1 bis 8, dadurch gekennzeichnet, daß die Leistung des Strahlungselements (14, 24) einstellbar ist.
